# EUROPEAN PATENT SPECIFICATION

(11) **EP 1 547 724 B1**
(45) Date of publication and mention of the grant of the patent: **20.02.2008**
(21) Application number: 03380304.0
(22) Date of filing: 22.12.2003
(51) Int. Cl.: B23P 19/04, B65D 19/38

(54) **Machine for shaping and re-nailing wooden pallets**
Vorrichtung zum Formen und Wiedernageln von Holzpaletten
Dispositif de formage et reclouage de palettes en bois

(43) Date of publication of application: 29.06.2005
(73) Proprietor: Martin Eizaguirre, Juan José, 28005 San Martin de la Vega, Madrid (ES)
(72) Inventor: Martin Eizaguirre, Juan José, 28005 San Martin de la Vega, Madrid (ES)
(74) Representative: Davila Baz, Angel

(56) References cited:
- AU-B- 645 178
- AU-B- 646 554
- US-A- 5 588 578

## Description

### FIELD OF THE INVENTION

The present invention refers to a machine for shaping and re-nailing wooden pallets used for product storage which, as a result of use, have undergone different types of damage.

The machine for shaping and re-nailing wooden pallets object of the present invention can be used in pallet repair positions, in semi-automatic, automatic or manual sorting lines and at the delivery of all types of palletizing lines.

### BACKGROUND OF THE INVENTION

The use of standard dimension wooden pallets has currently become widespread for product storage in sectors such as logistics or transport.

The technical advances experienced in high-speed palletizing systems and in palletized product storage require a necessary minimum wooden pallet quality.

As pallets are used, specifically when handled by means of fork lifts, a series of damage is produced by the striking thereof, among which can be mentioned:
- problems derived form the geometry and dimensions of the pallets,
- problems of loss of solidity and rigidity of the nailed unions,
- problems derived from the outcropping of the nails joining the boards and blocks constituting the pallet, which can be caused by blows or simply by the dehydration of the wood.

All these problems cause different negative effects on the products which are stored thereon.

The outcropping of the nails above the surface of the pallet makes the boxes deposited thereon deteriorate, possibly causing spills of the products contained therein, one clear example is the case of boxes containing detergents or liquids, such as milk. Therefore, the deterioration of the pallets causes deteriorations in the containers, and as a result economic losses caused by the spillage of the products.

The currently manufactured standard pallets leave the plant already complying with the necessary dimensional and quality requirements, since their manufacture is carried out with previously selected boards, and the nailing is carried out with automatic machines.

On many occasions, due to the damage occurring to the pallet by use thereof, the pallets are disposed of and replaced with new pallets, increasing storage costs. For these reasons, the market demands pallets which can be used the largest possible number of times before being destroyed.

As a solution to these problems, single-use disposable pallets have been manufactured, this solution being rather impractical and not economical.

Document EP-A-207658 discloses a pallet repairing tool which is provided with a pair of blades laterally separated with regard to the shafts of the corresponding drive means supporting the blades, which are separated enough so as to house the block and facilitate positioning of the blades on the cutting line along which the boards are fixed to one another. The blades approach one another during the cutting operation. Each one of the blades has a beveled surface distanced from the cutting surface to facilitate release of the board from the block during the cutting cycle.

The only thing this tool does is to separate the boards from the blocks by cutting the nail connecting them as a result of the cutting blades. It does not nail in the nails projecting from the pallet, nor does it correct the squaring and dimensions thereof. Therefore, it cannot rectify the problems set forth above.

On the other hand, document AU-B-12848 192 discloses a pallet repairing device which corrects the lack of squaring between the board and the block, for which the device is provided with a retaining bar connected to a hydraulic cylinder, the bar is placed behind one of the edges of the board and the piston of the cylinder pushes against the end edge of the block until it is squared with the bar.

Although this device corrects pallet squaring problems, it does not solve dimensional problems nor the problems of nail outcropping, nor the loss of solidity of the unions between the boards and the blocks.

The preamble of claim 1 is based on AU-B-15057/92.

### DESCRIPTION OF THE INVENTION

The present invention refers to a machine for shaping and re-nailing wooden pallets according to claim 1; preferred embodiments of the machine for shaping wooden pallets are defined in the dependent claims.

The machine for shaping and re-nailing wooden pallets object of the present invention comprises:
- pallet gripping and shaping means.
- re-nailing means.
- support means.
- operating means.

The pallet gripping and shaping means are provided with two groups of clamps, a first group of clamps located at one of the sides of the runners of the pallet, when the pallet is positioned on said pallet gripping and shaping means, and configured to be simultaneously moved by means of first thrusting means, and a second group of clamps located on the opposite side of the pallet runners when the pallet is positioned on said gripping and shaping means, and configured to be simultaneously moved in a direction contrary to the first ones by means of second thrusting means, the thrust force applied on the runners by one of the groups of clamps being greater than the thrust force applied on said runners by the other group of clamps.

The re-nailing means consist of a first group of re-nailing elements coinciding with the position occupied by each one of the blocks constituting the pallet, when the latter is positioned on the gripping and shaping means, and perpendicularly located above the boards resting on said blocks, and a second group of re-nailing elements coinciding with the position occupied by the ends and center of the boards of the upper side of the pallet which do not rest on said blocks, when the pallet is positioned on the gripping and shaping means, and perpendicularly placed above said ends.

The support means consist of a lower frame, an intermediate frame and an upper frame, the lower frame comprises a plurality of support legs and a support for the gripping and shaping means and for the first and second thrusting means, the intermediate frame is provided with a plurality of support legs and several anvils or reinforcement plates on which the blocks of the pallet rest, and lastly, the upper frame is provided with support elements of the first and second groups of re-nailing elements, the upper frame being supported by the intermediate frame by means of support columns.

The operating means comprise drive devices for the first and second thrusting means of the gripping elements.

The first group of clamps may be made up of a plurality of flat lips parallel to one another and to the runners of the pallet, and perpendicular to the upper side of the wooden pallet, and the second group of clamps may be made up of a plurality of flat lips parallel to one another and to the previous ones.

The length of the lips of the first and second group of clamps may be equal to or less than the length of the runners of the pallet.

The lips of each one of the groups of clamps may be arranged on each one of the sides of each one of the runners forming the pallet, as a result the number of lips of each group of clamps would be equal to the number of runners of the pallet, which in this case is equal to 3.

Furthermore, the thrusting means may comprise at least two shafts parallel to one another fixed to both ends of the lower edge of the lips of the first group of clamps, and for their part, the second thrusting means may comprise at least two shafts parallel to one another, fixed to both ends of the lower edge of the lips of the second groups of clamps. The shafts of the second thrusting means may be located between the shafts of the first pushing means.

Furthermore, each one of the elements of the first group of re-nailing elements may be made up of a ram configured to be operated by its corresponding hydraulic cylinder, and each one of the elements of the second group of re-nailing elements may be made up of a ram configured to be operated by its corresponding pneumatic cylinder.

The support of the first and second thrusting means, arranged on the lower frame, may consist of respective parallel intermediate beams, on the ends of which linear bearings are arranged on which the shafts of the first and second thrusting means rest.

The drive devices of the operating means may comprise two hydraulic cylinders located near each one of the side runners of the pallet and connected to the first and second thrusting means respectively by means of respective tie rods. Specifically, said tie rods are bars which connect the two shafts of each one of the thrusting means such that both shafts of each one of the thrusting means move at the same time, and therefore said shafts can move, with the same speed, to both ends of each one of the lips comprised by each group of clamps.

Furthermore, the legs of the intermediate frame may be vertically adjustable so that the machine assembly can in turn be vertically adjusted and be adapted to the height of the user of the machine in each particular case.

First, the pallet is placed on the machine such that each one of the runners rests between one of the lips corresponding to the first group of clamps and one of the lips corresponding to the second group of clamps, each block resting on its corresponding anvils of the intermediate frame of the support means.

Due to the action of the hydraulic cylinders constituting the operating means of the first and second group of clamps, an approaching of the lips of each group of clamps occurs for each one of the runners of the pallet, and therefore the integral gripping of said runners is achieved while at the same time the lack of squaring which any of said runners could have with regard to the upper boards of the pallet, or even with regard to one another, is corrected.

Then, the hydraulic cylinders of the first group of re-nailing elements and the pneumatic cylinders of the second group of re-nailing elements begin to operate, making each one of the corresponding rams placed on the blocks and on the ends and center of the remaining boards of the upper side of the pallet which do not rest on the blocks move downwards, definitively driving in any nail projecting from the surface of the pallet and thus securing the unions between the boards and the blocks constituting the pallet.

To complete the cycle, the hydraulic cylinders of the two groups of clamps act again, being withdrawn and releasing the runners of the pallet, the already shaped and re-nailed pallet being extracted from the machine.

Furthermore, the machine for shaping and re-nailing pallets is preferably provided with a mechanism for ensuring the lengthwise limit of the pallet, said mechanism comprising a support base located above the pallet, two drive cylinders connected to said support base with rotational ability by means of respective supports, a stop connected to one of the drive cylinders by means of first transmission arms and a compression element connected to the other drive cylinder by means of second transmission arms.

The support base mainly consists of a flat body having dimensions which are somewhat larger than those of the pallet at hand. For their part, the first and second transmission arms are articulated, at one of their ends, with regard to the corresponding drive cylinder, and joined with rotational possibility, at an intermediate point thereof, to the edges of the support base, specifically the edges of the support base perpendicular to the runners of the pallet. Both the first and second transmission arms are made up of respective parallel bars bent at a certain angle, the vertex of said angle coinciding with the connection point of the transmission arms to the support base, the bars of the first transmission arms are connected to one another and to the stop by means of a bar perpendicular to said bars, and the bars of the second transmission arms are connected to one another and to the compression element by means of another bar perpendicular to said bars.

The stop connected to the ends of the first transmission arms is also flat and has a width approximately equal to one of the sides of the pallet perpendicular to the runners thereof.

The compression element connected to the end of the second transmission arms is provided with a thrusting cylinder and a plate set up to be driven by said cylinder. Said plate has a shape similar to the stop connected to the first transmission arms.

The mechanism for ensuring the lengthwise limit of the pallet is located above the upper frame of the re-nailing elements and fixed thereto by means of the support columns arranged on said upper frame.

Once the pallet is placed in the machine, firstly the drive cylinder connected to the stop acts, which, as a result of the configuration of the first transmission arms, causes the stop to approach one of the walls of the pallet perpendicular to the runners of the pallet, the stop thereby being parallel to said wall, resting against it.

Then, the other cylinder acts on the compression element, placing it parallelly to the opposite wall of the pallet and at a certain distance, as a result of the configuration of the second transmission arms and the larger dimensions of the support base.

To conclude, the thrusting cylinder of said compression elements acts on the corresponding plate, which exerts the desired pressure against said opposite wall, thus being able to ensure the lengthwise limit of the pallet.

### BRIEF DESCRIPTION OF THE DRAWINGS

The features of the present invention will be more clearly understood from the following description which shows an embodiment, a set of drawings being attached as an integral part of said description which, with an illustrative and non-limiting character, shows the following:
Figure 1 shows two perspective views of a wooden pallet.
Figure 2 shows several examples of the damage caused to a wooden pallet during its use.
Figure 3 shows front elevational, right side and upper plan views of the machine for shaping and re-nailing wooden pallets according to the present invention, when the pallet is placed in the machine.
Figure 4 shows front elevational, right side and upper plan views of the lower frame of the machine for shaping and re-nailing wooden pallets according to the present invention.
Figure 5 shows a perspective view of the gripping and shaping means of the machine for shaping and re-nailing wooden pallets according to the present invention.
Figure 6 shows front elevational and upper plan view of the support means and of the operating means of the gripping and shaping means of the machine for shaping and re-nailing wooden pallets according to the present invention.
Figure 7 shows front elevational, right side and upper plan views of the upper frame of the machine for shaping and re-nailing wooden pallets according to the present invention.
Figure 8 shows front elevational, right side and upper plan views of the intermediate frame of the machine for shaping and re-nailing wooden pallets according to the present invention.
Figure 9 shows front elevational and upper plan views of the mechanism for ensuring the lengthwise limit of the pallet of the machine for shaping and re-nailing wooden pallets according to the present invention.

### DESCRIPTION OF A PREFERRED EMBODIMENT OF THE INVENTION

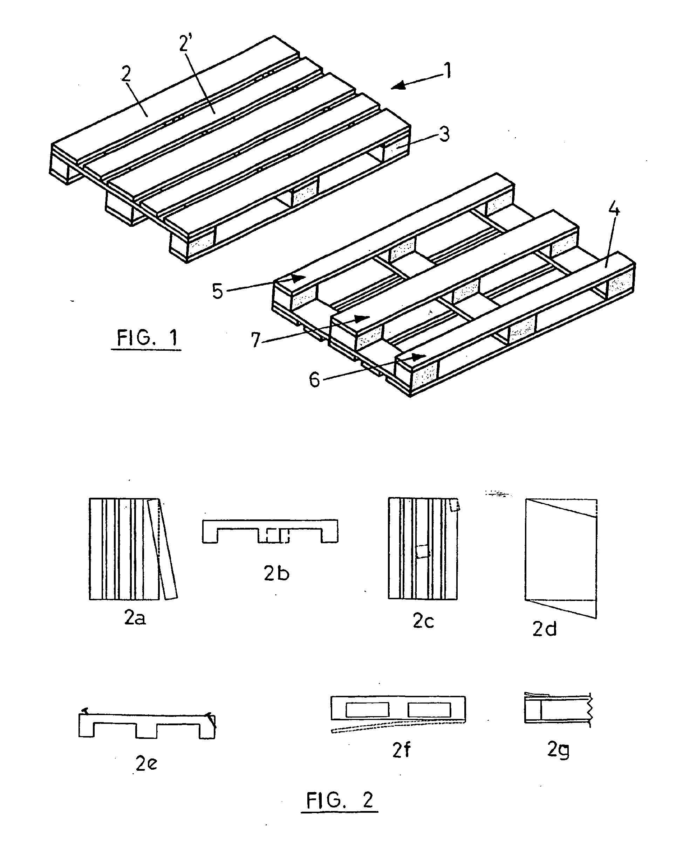

Figure 1 shows a wooden pallet 1 provided with an upper side formed by a plurality of contiguous and coplanar boards 2, the end and central boards being joined to blocks 3 located under them, which in turn are connected to lower boards 4 parallel to the boards 2 of the upper side, defining two side runners 5 and 6 and a central runner 7. The union between the boards 2 and 4 and the blocks 3 is usually carried out by means of nails (not shown in figure 1).

Figure 2 shows different types of damage occurring to the pallet 1 due to its use, for example 2a shows a loss of parallelism of the boards 4 of the side runner 5, 2b shows a shifting of the central runner 7 and the side runners 5 and 6, 2c shows turned blocks, 2d shows a loss of the squaring of the pallet 1, 2e shows how the heads of some nails project, 2f shows a warped board 2 due to insufficient nailing, and 2g shows a deformed and de-nailed board 2.

In order to try to rectify the different problems presented above as much as possible, a machine has been designed which, on the one hand, solves dimensional and squaring problems of the pallet 1, and on the other hand, nails in again the nails projecting from the surface of the pallet 1, at the same time securing the unions between the boards 2 and 4 and the blocks 3 of the pallet 1.

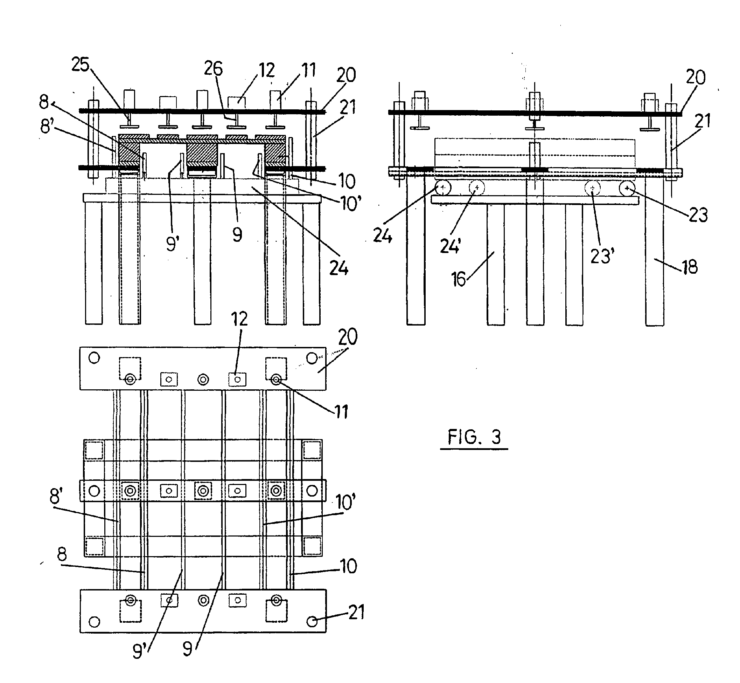

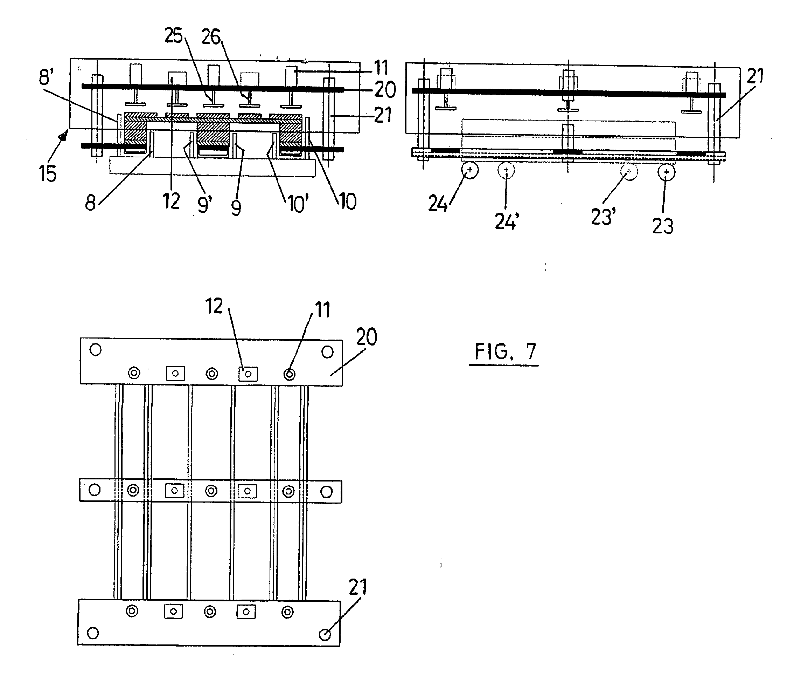

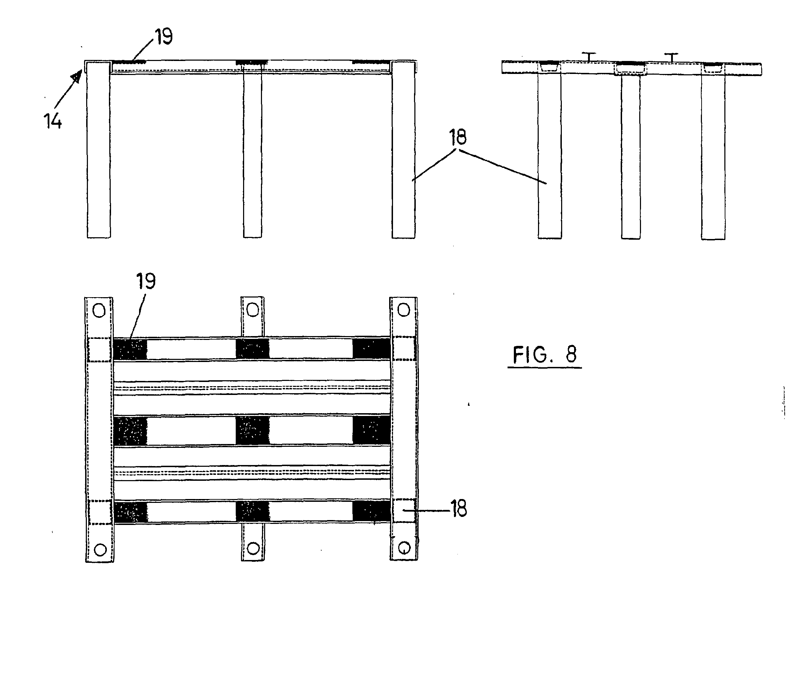

As can be seen in figures 3 to 8, the machine for shaping and re-nailing wooden pallets 1 object of the present invention comprises:

Pallet gripping and shaping means which are provided with two groups of clamps, a first group of clamps 8, 9 and 10 located to one of the sides of the runners 5, 6 and 7 when the pallet 1 is positioned on said gripping and shaping means, and configured to be simultaneously moved by means of first thrusting means, and a second group of clamps 8', 9' and 10' located on the opposite side of the runners 5, 6 and 7 when the pallet 1 is positioned on said gripping and shaping means, and configured to be simultaneously moved in the opposite direction to the first ones by means of second thrusting means, the thrust force applied on the runners by the first group of clamps 8, 9 and 10 being greater than the thrust force applied on said runners by the second group of clamps 8', 9' and 10'.

The re-nailing means consist of a first group of re-nailing elements 11 coinciding with the position occupied by each one of the blocks 3 constituting the pallet 1 when the pallet 1 is positioned on the gripping and shaping means, and located perpendicularly above the boards 2 resting on said blocks, and a second group of re-nailing elements 12 coinciding with the position occupied by the ends and center of the boards 2' of the upper side of the pallet which do not rest on said blocks 3 when the pallet 1 is positioned on the gripping and shaping means, and located perpendicularly above said ends.

The support means are provided with a lower frame 13, an intermediate frame 14 and an upper frame 15, the lower frame 13 comprises a plurality of support legs 16 and a support 17 for the gripping and shaping means and for the first and second thrusting means, the intermediate frame 14 is provided with a plurality of support legs 18 and several anvils 19 or reinforcement plates on which the blocks 3 of the pallet 1 rest, and the upper frame 15 is provided with support elements 20 for the first and second group of re-nailing elements, the upper frame 15 being supported by the intermediate frame 14 by means of support columns 21.

The operating means comprise drive devices of the first and second thrusting means of the gripping elements.

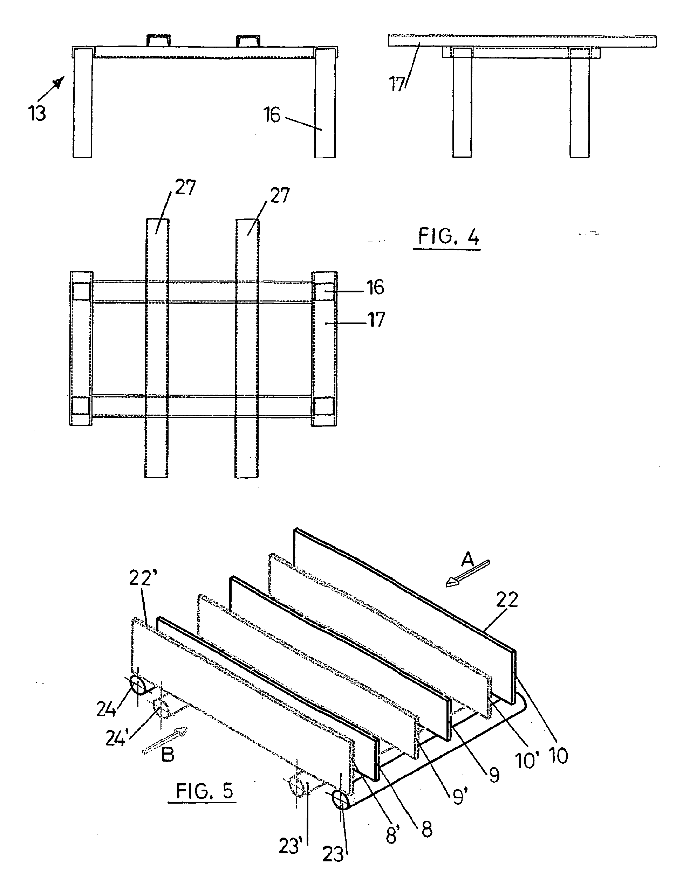

In this preferred embodiment of the invention, as seen in figure 5, the first group of clamps 8, 9 and 10 is made up of flat lips 22 parallel to one another and to the runners 5, 6 and 7 of the pallet 1 and perpendicular to the upper side thereof, and the second group of clamps 8', 9' and 10' is made up of a plurality of flat lips 22' parallel to one another and to the first ones. The length of the lips 22 and 22' of both the first group of clamps 8, 9 and 10 and the second group of clamps 8', 9' and 10' will be equal to or less than the length of the runners 5, 6, 7 of the pallet 1.

The lips 22 and 22' of each one of the groups of clamps 8, 9 and 10; 8', 9' and 10' are arranged on each one of the sides of each one of the runners 5, 6 and 7 forming the pallet 1, as a result the number of lips 22 and 22' of each group of clamps 8, 9 and 10; 8', 9' and 10' is equal to the number of runners 5, 6 and 7 of the pallet 1.

Specifically in this first preferred embodiment of the invention, the number of lips 22 and 22' of each group of clamps 8, 9 and 10; 8', 9' and 10' will be equal to 3.

Furthermore, the first thrusting means comprise at least two shafts 23 and 24 parallel to one another fixed to both ends of the lower edge of the lips 22 of the first group of clamps 8, 9 and 10, and for their part, the second thrusting means comprise at least two shafts 23' and 24' parallel to one another fixed to both ends of the lower edge of the lips 22' of the second group of clamps 8', 9' and 10'. The shafts 23' and 24' of the second thrusting means will be placed between the shafts 23 and 24 of the first thrusting means.

Furthermore in this preferred embodiment, each one of the elements 11 of the first group of re-nailing elements is made up of a ram 25 configured so as to be operated by its corresponding hydraulic cylinder, and each one of the elements 12 of the second group of re-nailing elements is made up of a ram 26 configured so as to be operated by its corresponding pneumatic cylinder.

Figure 4 shows how the support for the first and second thrusting means, arranged on the lower frame 13, consists of respective intermediate parallel beams 27 and 27', on the ends of which are arranged linear bearings 28 and 29 on which the shafts 23 and 24 of the first thrusting means rest, and respective linear bearings 28' and 29' on which the shafts 23' and 24' of the second thrusting means rest.

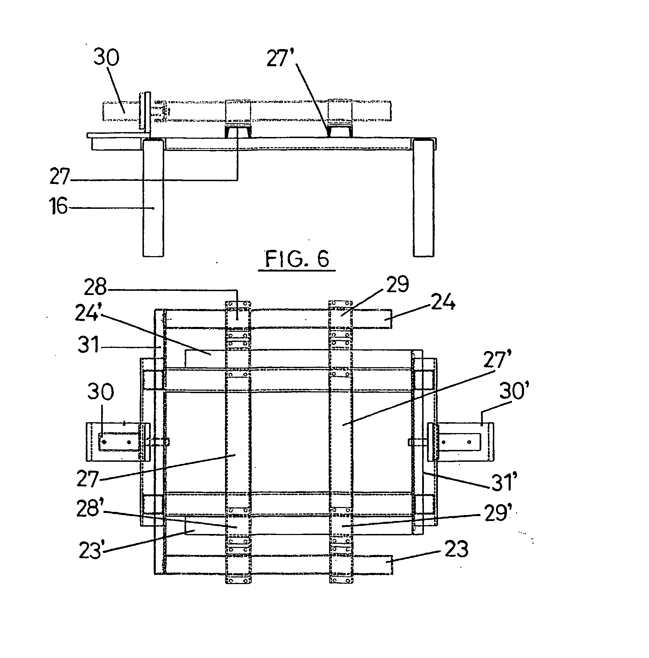

Figure 6 shows how the drive devices of the operating means comprise two hydraulic cylinders 30 and 30' located near each one of the side runners 5 and 6 of the pallet 1 and connected to the first and second thrusting means respectively by means of tie rods 31 and 31'. Specifically, said tie rods 31 and 31' are bars responsible for respectively connecting the two shafts 23 and 24 to the shafts 23' and 24' of each one of the thrusting means, such that both shafts of each one of the thrusting means move at the same time and therefore said shafts can move, with the same speed, to both ends of each one of the lips 22 and 22' comprising each group of clamps 8, 9 and 10; 8', 9' and 10'.

Furthermore, the legs 18 of the intermediate frame 14 are vertically adjustable so that the machine assembly can in turn be vertically adjusted and be adapted to the height of the user of the machine in each particular case.

Operation of the machine will be in the following manner, the pallet 1 will be manually, automatically or semi-automatically supplied to the machine, each one of the runners 5, 6 and 7 thereof being placed between two lips 22 and 22', one of these lips 22 corresponding to the first group of clamps 8, 9 and 10, and the second lip 22' corresponding to the second group of clamps 8', 9' and 10'. At the same time, each one of the blocks 3 forming each runner 5, 6 and 7 rest on the corresponding anvils 19 arranged on the intermediate frame 14 of the support means.

Then, one of the hydraulic cylinders 30 constituting the operating means of the first group of clamps 8, 9 and 10 acts, positioning the lips 22 corresponding to that first group of clamps 8, 9 and 10 at the original limits of the pallet 1.

Then, the other hydraulic cylinder 30' for operating the lips 22' of the second group of clamps 8', 9' and 10' acts in the opposite direction. In this case, the thrust force for the first group of clamps 8, 9 and 10, shown in figure 5 by arrow A, is greater than the thrust force of the second group of clamps, shown in figure 5 by arrow B. This approaching of the lips 22 and 22' of each corresponding group of clamps 8, 9 and 10; 8', 9' and 10' to each one of the runners 5, 6 and 7 of the pallet 1 causes the compression of said runners 5, 6 and 7.

The solid gripping of each one of the runners 5, 6 and 7 of the pallet 1 is thus achieved, and on the other hand, it corrects the lack of squaring which said runners 5, 6 and 7 may have with regard to the upper boards 2 of the pallet, or even with regard to one another, as a result of the flat configuration and the length of the lips 22 and 22' of both group of clamps 8, 9 and 10; 8', 9' and 10'.

Once the runners 5, 6 and 7 have been suitably fixed by both group of clamps 8, 9 and 10; 8', 9' and 10' and the blocks 3 of the pallet 1 suitably rest on the respective anvils 19 of the intermediate frame 14, the hydraulic cylinders of the first group of re-nailing elements 11 and the pneumatic cylinders of the second group of nailing elements 12 begin to act.

Said hydraulic and pneumatic cylinders, in turn, make each one of the corresponding rams 25 and 26, which are respectively located on the blocks 3 and on the ends and center of the remaining boards 2' of the upper side of the pallet 1 not resting on the blocks 3, move downwards, definitively driving in any nail which, due to the use of the pallet 1, projects from the surface thereof. All the cylinders act and recover simultaneously, even though their operation may be alternated.

Finally, the hydraulic cylinders of the two groups of clamps 8, 9 and 10; 8', 9' and 10' act again, being withdrawn in this case and releasing the runners 5, 6 and 7 of the pallet 1 in order to extract it from the machine once it has been shaped and re-nailed.

For its operation, the machine will need an electric power source and a compressed air source to move the clamps and the different cylinders of the machine. Regulation and control of the machine is carried out by means of a programmable robot (PLC).

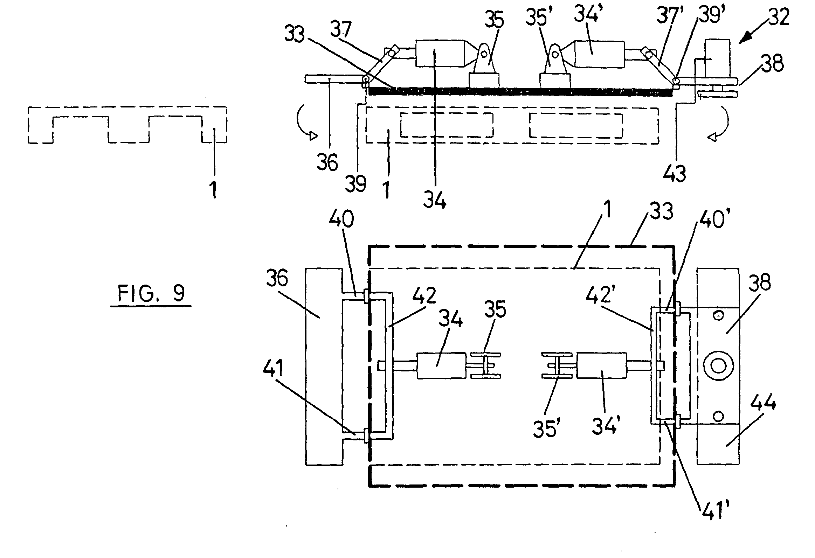

As can be seen in figure 9, the invention is additionally provided with a mechanism 32 to ensure the lengthwise limit of the pallet 1, said mechanism comprises a support base 33 located above the pallet 1, two drive cylinders 34 and 34' connected with rotational possibility to said support base 33 by means of respective supports 35, 35', a stop 36 connected to one of the drive cylinders 34 by means of first transmission arms 37, and a compression element 38 connected to the other drive cylinder 34' by means of second transmission arms 37'.

The support base 33 mainly consists of a flat body having dimensions somewhat larger than those of the pallet 1 at hand. For their part, the first and second transmission arms 37 and 37' are articulated at one of their ends with regard to their corresponding drive cylinder 34, 34' and connected with rotational possibility, at an intermediate point 39, 39' thereof, to the edges of the support base 33, specifically the edges of the support base 33 perpendicular to the runners 5, 6 and 7 of the pallet 1. In this second preferred embodiment of the invention, both the first and second transmission arms 37 and 37' are made up of respective parallel bars 40 and 41; 40' and 41' bent at a certain angle, the vertex of said angle coinciding with the intermediate connection point 39 and 39' of the transmission arms 37 and 37' with the support base 33, the bars 40, 41 of the first transmission arms 37 are connected to one another and to the stop 36 by means of a bar 42 perpendicular to said bars 40, 41, and bars 40', 41' of the second transmission arms 37' are connected to one another and to the compression element 38 by means of another bar 42' perpendicular to said bars 40', 41'.

The stop 36 connected to the ends of the first transmission arms 37 is also flat and has a width approximately equal to one of the sides of the pallet 1 perpendicular to the runners 5, 6, 7 thereof.

The compression element 38 connected to the end of the second transmission arms 37' is provided with a thrusting cylinder 43 and a plate 44 set up so as to be operated by said thrusting cylinder 43. Said plate 44 has a configuration similar to that of the stop 36 connected to the first transmission arms 37.

The mechanism 32 for ensuring the lengthwise limit of the pallet 1 is located above the upper frame 15 and the re-nailing elements 11 and 12 and is fixed thereto by means of the support columns 21 arranged on said upper frame 15.

The way to operate this mechanism 32 is the following, the drive cylinder 34 connected to the stop 36 acts first as a result of the angular configuration of the transmission arms 37, which rotate with regard to the support base 33, the thrusting of said drive cylinder 34 determines an approaching of the stop 36 to one of the walls of the pallet 1 perpendicular to the runners 5, 6 and 7 thereof, therefore the stop 36 is parallel to said wall, resting against it.

Then, the other drive cylinder 34' acts on the compression element 38, placing it parallel to the opposite wall of the pallet 1 and at a certain distance, as a result of the configuration of the second transmission arms 37' and the dimensions of the support base 33, which are larger than those of the pallet, slightly projecting therefrom.

To conclude, the thrusting cylinder 43 of said compression element 38 acts on the corresponding plate 44 which exerts the desired pressure on said opposite wall, thus ensuring the lengthwise limit of the pallet 1.

## Claims

1. A machine for shaping and re-nailing wooden pallets (1), comprising
- pallet gripping and shaping means;
- re-nailing means;
- support means;
- operating means;
whereby the re-nailing means consist of a first group of re-nailing elements (11) coinciding with the position occupied by each one of the blocks (3) constituting the pallet (1) when the pallet (1) is positioned on the gripping and shaping means, and perpendicularly located above the boards (2) resting on said blocks (3)**characterized in that** :
the pallet gripping and shaping means are provided with two groups of clamps, a first group of clamps (8, 9, 10) located on one of the sides of the runners (5, 6, 7) when the pallet (1) is positioned on said gripping and shaping means, and configured to be simultaneously moved by means of first thrusting means (23,24), and a second group of clamps (8', 9', 10') located on the opposite side of the runners (5, 6, 7) when the pallet (1) is positioned on said gripping and shaping means, and configured to be simultaneously moved in the opposite direction to the first ones by means of second thrusting means (23', 24'), the thrust force applied on the runners (5, 6, 7) by the first group of clamps (8, 9, 10) being greater than the thrust force applied on said runners by the second group of clamps (8', 9', 10'); and the renailing means further comprises a second group of renailing elements (12) coinciding with the position occupied by the ends and center of the boards (2') of the upper side of the pallet (1) which do not rest on said blocks (3) when the pallet (1) is positioned on the gripping and shaping means, and perpendicularly placed above said ends and center;
and that support means consist of a lower frame (13), an intermediate frame (14) and an upper frame (15), which lower frame (13) comprises a plurality of support legs (16) and a support (17) for the gripping and shaping means and for the first and second thrusting means, which intermediate frame (14) is provided with a plurality of support legs (18) and several anvils (19) or reinforcement plates on which the blocks (3) of the pallet (1) rest, and which upper frame (15) is provided with support elements (20) for the first and second group of re-nailing elements, the upper frame (15) being configured so as to be supported by the intermediate frame (14) by means of support columns (21);
which operating means comprise drive devices (30,30',31,31') for the first and second thrusting means of the gripping elements.

2. A machine for shaping and re-nailing wooden pallets (1) according to claim 1, **characterized in that** the first group of clamps (8, 9, 10) is made up of a plurality of flat lips (22) parallel to one another and to the runners (5, 6, 7) of the pallet (1) and perpendicular to the upper side of said pallet (1), and **in that** the second group of clamps (8', 9', 10') is composed of a plurality of flat lips (22') parallel to one another and to the first ones.

3. A machine for shaping and re-nailing wooden pallets (1) according to claim 2, **characterized in that** the number of lips (22, 22') of each group of clamps (8, 9, 10; 8', 9', 10') is equal to the number of runners (5, 6, 7) of the pallet (1).

4. A machine for shaping and re-nailing wooden pallets according to claim 3, **characterized in that** the number of lips (22, 22') of each group of clamps (8, 9, 10; 8', 9', 10') is equal to three.

5. A machine for shaping and re-nailing wooden pallets (1) according to the previous claims, **characterized in that** the first thrusting means comprise at least two shafts (23, 24) parallel to one another, fixed to both ends of the lower edge of the lips (22) of the first group of clamps (8, 9, 10), and **in that** the second thrusting means comprise at least two shafts (23', 24') parallel to one another, fixed to both ends of the lower edge of the lips (22') of the second group of clamps (8', 9', 10').

6. A machine for shaping and re-nailing wooden pallets according to claim 5, **characterized in that** the shafts (23', 24') of the second thrusting means are located between shafts (23, 23') of the first thrusting means.

7. A machine for shaping and re-nailing wooden pallets according to the previous claims, **characterized in that** each one of the elements (11) of the first group of re-nailing elements (11) is made up of a ram (25) set up so as to be actuated by a hydraulic cylinder, and **in that** each one of the elements (12) of the first group of re-nailing elements (12) is made up of a ram (26) set up so as to be operated by a pneumatic cylinder.

8. A machine for shaping and re-nailing wooden pallets according to the previous claims, **characterized in that** the support (17) for the first and second thrusting means, arranged on the lower frame (13), consists of respective intermediate parallel beams (27, 27'), on the ends of which linear bearings (28, 29; 28', 29') are arranged on which the shafts (23, 24; 23', 24') of the first and second thrusting means rest.

9. A machine for shaping and re-nailing wooden pallets according to the previous claims, **characterized in that** the drive devices of the operating means comprise two hydraulic cylinders (30, 30') located near each one of the side runners (5, 6) of the pallet and are connected to the first and second thrusting means, respectively, by means of respective tie rods (31, 31').

10. A machine for shaping and re-nailing wooden pallets according to the previous claims, **characterized in that** the legs (18) of the intermediate frame (14) are vertically adjustable.

11. A machine for shaping and re-nailing wooden pallets according to the previous claims, **characterized in that** it is provided with a mechanism (32) for ensuring the lengthwise limit of the pallet (1), comprising a support base (33) located above the pallet (1), two drive cylinders (34, 34') connected with rotational possibility to said support base (33) by means of respective support (35, 35'), a stop (36) connected to one of the drive cylinders (34) by means of first transmission arms (37), and a compression element (38) connected to the other drive cylinder (34') by means of second transmission arms (37'), which first and second transmission arms (37, 37') are articulated, at one of their ends, with regard to their corresponding drive cylinder (34, 34') and connected with rotational possibility, at an intermediate point (39, 39') thereof, to the edges of the support base (33) perpendicular to the runners (5, 6, 7) of the pallet (1), and which compression element (38) is provided with a cylinder (43) and a plate (44) set up so as to be actuated by said thrusting cylinder (43).

12. A machine for shaping and re-nailing wooden pallets (1) according to claim 10, **characterized in that** the mechanism (32) for ensuring the lengthwise limit of the pallet (1) is located above the upper frame (15) and above the re-nailing elements (11, 12) and fixed thereto by means of the support columns (21) arranged on said upper frame (15).

## Patentansprüche

1. Maschine zum Formen und Wiedervernageln von Holzpaletten (1), umfassend:
- Mittel zum Festhalten und Formen von Paletten;
- Wiedervernagelungsmittel;
- Stützmittel;
- Betätigungsmittel;
wobei die Wiedervernagelungsmittel aus einer ersten Gruppe von Wiedervernagelungselementen (11) bestehen, die mit der Position übereinstimmen, die von einem jeden der Blöcke (3) eingenommen wird, welche die Palette (1) bilden, wenn die Palette (1) auf den Festhalte- und Formmitteln positioniert ist, und senkrecht über den Brettern (2) angeordnet sind, die auf den Blöcken (3) aufliegen,
**dadurch gekennzeichnet, dass**:
die Mittel zum Festhalten und Formen von Paletten mit zwei Gruppen von Klemmen versehen sind, einer ersten Gruppe von Klemmen (8, 9, 10), die sich auf einer der Seiten der Läufer (5, 6, 7) befinden, wenn die Palette (1) auf den Festhalte- und Formmitteln positioniert ist, und so ausgelegt sind, dass sie mittels erster Schiebemittel (23, 24) gleichzeitig bewegt werden, und einer zweiten Gruppe von Klemmen (8', 9', 10'), die sich auf der gegenüberliegenden Seite der Läufer (5, 6, 7) befinden, wenn die Palette (1) auf den Festhalte- und Formmitteln positioniert ist, und so ausgelegt sind, dass sie mittels zweiter Schiebemittel (23', 24') in der entgegengesetzten Richtung zu den ersten gleichzeitig bewegt werden, wobei die Schubkraft, die auf die Läufer (5, 6, 7) durch die erste Gruppe von Klemmen (8, 9, 10) ausgeübt wird, größer ist als die Schubkraft, die auf die Läufer durch die zweite Gruppe von Klemmen (8', 9', 10') ausgeübt wird; und
die Wiedervernagelungsmittel ferner eine zweite Gruppe von Wiedervernagelungselementen (12) umfassen, die mit der Position übereinstimmen, die von den Enden und der Mitte der Bretter (2') auf der Oberseite der Palette (1) eingenommen wird, die nicht auf den Blöcken (3) aufliegen, wenn die Palette (1) auf den Festhalte- und Formmitteln positioniert ist, und senkrecht über den Enden und der Mitte angeordnet sind;
und dass die Stützmittel aus einem unteren Rahmen (13), einem Zwischenrahmen (14) und einem oberen Rahmen (15) bestehen, wobei der untere Rahmen (13) eine Mehrzahl von Stützbeinen (16) und eine Stütze (17) für die Festhalte- und Formmittel und für die ersten und zweiten Schiebemittel umfasst, der Zwischenrahmen (14) mit einer Mehrzahl von Stützbeinen (18) und mehreren Ambossen (19) oder Verstärkungsplatten versehen ist, auf welchen die Blöcke (3) der Palette (1) aufliegen, und der obere Rahmen (15) mit Stützelementen (20) für die erste und zweite Gruppe von Vernagelungselementen versehen ist und der obere Rahmen (15) so ausgelegt ist, dass er durch den Zwischenrahmen (14) mittels Stützsäulen (21) gestützt wird;
wobei die Betätigungsmittel Antriebseinrichtungen (30, 30', 31, 31') für die ersten und zweiten Schiebemittel der Festhalteelemente umfassen.

2. Maschine zum Formen und Wiedervernageln von Holzpaletten (1) nach Anspruch 1, **dadurch gekennzeichnet, dass** die erste Gruppe von Klemmen (8, 9, 10) aus einer Mehrzahl von flachen Lippen (22) besteht, die parallel zueinander und zu den Läufern (5, 6, 7) der Palette (1) und senkrecht zur Oberseite der Palette (1) sind, und dass die zweite Gruppe von Klemmen (8', 9', 10') aus einer Mehrzahl von flachen Lippen (22') besteht, die parallel zueinander und zu den ersten sind.

3. Maschine zum Formen und Wiedervernageln von Holzpaletten (1) nach Anspruch 2, **dadurch gekennzeichnet, dass** die Anzahl von Lippen (22, 22') jeder Gruppe von Klemmen (8, 9, 10; 8', 9', 10') gleich der Anzahl von Läufern (5, 6, 7) der Palette (1) ist.

4. Maschine zum Formen und Wiedervernageln von Holzpaletten (1) nach Anspruch 3, **dadurch gekennzeichnet, dass** die Anzahl von Lippen (22, 22') jeder Gruppe von Klemmen (8, 9, 10; 8', 9', 10') gleich drei ist.

5. Maschine zum Formen und Wiedervernageln von Holzpaletten (1) nach den vorhergehenden Ansprüchen, **dadurch gekennzeichnet, dass** die ersten Schiebemittel wenigstens zwei Wellen (23, 24) parallel zueinander umfassen, die an beiden Enden der Unterkante der Lippen (22) der ersten Gruppe von Klemmen (8, 9, 10) befestigt sind, und dass die zweiten Schiebemittel wenigstens zwei Wellen (23', 24') parallel zueinander umfassen, die an beiden Enden der Unterkante der Lippen (22') der zweiten Gruppe von Klemmen (8', 9', 10') befestigt sind.

6. Maschine zum Formen und Wiedervernageln von Holzpaletten nach Anspruch 5, **dadurch gekennzeichnet, dass** sich die Wellen (23', 24') der zweiten Schiebemittel zwischen den Wellen (23, 24) der ersten Schiebemittel befinden.

7. Maschine zum Formen und Wiedervernageln von Holzpaletten nach den vorhergehenden Ansprüchen, **dadurch gekennzeichnet, dass** ein jedes der Elemente (11) der ersten Gruppe von Wiedervernagelungselementen (11) aus einem Stempel (25) besteht, der so aufgebaut ist, dass er durch einen hydraulischen Zylinder betätigt wird, und dass ein jedes der Elemente (12) der zweiten Gruppe von Wiedervernagelungselementen (12) aus einem Stempel (26) besteht, der so aufgebaut ist, dass er durch einen pneumatischen Zylinder betrieben wird.

8. Maschine zum Formen und Wiedervernageln von Holzpaletten nach den vorhergehenden Ansprüchen, **dadurch gekennzeichnet, dass** die Stütze (17) der ersten und zweiten Schiebemittel, die auf dem unteren Rahmen (13) angeordnet ist, aus jeweiligen parallelen Zwischenträgern (27, 27') besteht, auf deren Enden Linearlager (28, 29; 28', 29') angeordnet sind, auf welchen die Wellen (23, 24; 23', 24') der ersten und zweiten Schiebemittel aufliegen.

9. Maschine zum Formen und Wiedervernageln von Holzpaletten nach den vorhergehenden Ansprüchen, **dadurch gekennzeichnet, dass** die Antriebseinrichtungen der Betätigungsmittel zwei hydraulische Zylinder (30, 30') umfassen, die sich in der Nähe eines jeden der Seitenläufer (5, 6) der Palette befinden und mittels jeweiliger Zugstangen (31, 31') mit den ersten beziehungsweise zweiten Schiebemitteln verbunden sind.

10. Maschine zum Formen und Wiedervernageln von Holzpaletten nach den vorhergehenden Ansprüchen, **dadurch gekennzeichnet, dass** die Beine (18) des Zwischenrahmens (14) vertikal verstellbar sind.

11. Maschine zum Formen und Wiedervernageln von Holzpaletten nach den vorhergehenden Ansprüchen, **dadurch gekennzeichnet, dass** sie mit einem Mechanismus (32) zum Sicherstellen der Längsbegrenzung der Palette (1) versehen ist, umfassend eine Stützbasis (33), die sich über der Palette (1) befindet, zwei Antriebszylinder (34, 34'), die mit Drehmöglichkeit mit der Stützbasis (33) mittels einer jeweiligen Stütze (35, 35') verbunden sind, einen Anschlag (36), der mit einem der Antriebszylinder (34) mittels erster Übertragungsarme (37) verbunden ist, und ein Druckelement (38), das mit dem anderen Antriebszylinder (34') mittels zweiter Übertragungsarme (37') verbunden ist, wobei die ersten und zweiten Übertragungsarme (37, 37') an einem ihrer Enden in Bezug auf ihren entsprechenden Zylinder (34, 34') mit Gelenken versehen sind und mit Drehmöglichkeit an einer Zwischenstelle (39, 39') davon mit den Kanten der Stützbasis (33) senkrecht zu den Läufern (5, 6, 7) der Palette (1) verbunden sind, und wobei das Druckelement (38) mit einem Zylinder (43) und einer Platte (44) versehen ist, die so aufgebaut ist, dass sie durch den Schiebezylinder (43) betätigt wird.

12. Maschine zum Formen und Wiedervernageln von Holzpaletten (1) nach Anspruch 10, **dadurch gekennzeichnet, dass** sich der Mechanismus (32), der die Längsbegrenzung der Palette (1) sicherstellt, über dem oberen Rahmen (15) und über den Wiedervernagelungselementen (11, 12) befindet und mittels der Stützsäulen (21), die auf dem oberen Rahmen (15) angeordnet sind, daran befestigt ist.

## Revendications

1. Machine pour former et reclouer des palettes en bois (1), comprenant :
des moyens de préhension et de formage de palette ;
des moyens de reclouage ;
des moyens de support ;
des moyens de commande;
moyennant quoi les moyens de reclouage se composent d'un premier groupe d'éléments de reclouage (11) coïncidant avec la position occupée par chacun des blocs (3) constituant la palette (1) lorsque la palette (1) est positionnée sur les moyens de préhension et de formage, et positionnée perpendiculairement au-dessus des planches (2) reposant sur lesdits blocs (3), **caractérisée en ce que** :
les moyens de préhension et de formage de palette sont prévus avec deux groupes de dispositifs de serrage, un premier groupe de dispositifs de serrage (8, 9,10) situé sur l'un des côtés des longerons (5, 6, 7) lorsque la palette (1) est positionnée sur lesdits moyens de préhension et de formage, et configurée pour être déplacée simultanément au moyen des premiers moyens de poussée (23, 24), et un second groupe de dispositifs de serrage (8', 9', 10') situé sur le côté opposé des longerons (5, 6, 7), lorsque la palette (1) est positionnée sur lesdits moyens de préhension et de formage, et configurée pour être simultanément déplacée dans la direction opposée des premiers moyens au moyen des seconds moyens de poussée (23', 24'), la force de poussée appliquée sur les longerons (5, 6, 7) par le premier groupe de dispositifs de serrage (8, 9, 10) étant supérieure à la force de poussée appliquée sur lesdits longerons par le second groupe de dispositifs de serrage (8', 9', 10') ;
et les moyens de reclouage comprennent en outre un second groupe d'éléments de reclouage (12) coïncidant avec la position occupée par les extrémités et le centre des planches (2') sur le côté supérieur de la palette (1) qui ne repose pas sur lesdits blocs (3) lorsque la palette (1) est positionnée sur les moyens de préhension et de formage, et placée perpendiculairement au-dessus desdites extrémités et du centre ;
et **en ce que** les moyens de support se composent d'un châssis inférieur (13), d'un châssis intermédiaire (14) et d'un châssis supérieur (15), lequel châssis supérieur (13) comprend une pluralité de pattes de support (16) et un support (17) pour les moyens de préhension et de formage et pour les premiers et seconds moyens de poussée, dont le châssis intermédiaire (14) est prévu avec une pluralité de pattes de support (18) et plusieurs enclumes (19) ou plaques de renforcement sur lesquelles les blocs (3) de la palette (1) reposent, et dont le châssis supérieur (15) est prévu avec des éléments de support (20) pour les premier et second groupes d'éléments de reclouage, le châssis supérieur (15) étant configuré afin d'être supporté par le châssis intermédiaire (14) au moyen de colonnes de support (21) ;
dont les moyens de commande comprennent des dispositifs d'entraînement (30, 30', 31, 31') pour les premiers et seconds moyens de poussée des éléments de préhension.

2. Machine pour former et reclouer des palettes en bois (1) selon la revendication 1, **caractérisée en ce que** le premier groupe de dispositifs de serrage (8, 9, 10) est composé d'une pluralité de lèvres plates (22) parallèles entre elles et aux longerons (5, 6, 7) de la palette (1) et perpendiculaires au côté supérieur de ladite palette (1) et **en ce que** le second groupe de dispositifs de serrage (8', 9', 10') est composé d'une pluralité de lèvres plates (22') parallèles entre elles et aux premières.

3. Machine pour former et reclouer des palettes en bois (1) selon la revendication 2, **caractérisée en ce que** le nombre de lèvres (22, 22') de chaque groupe de dispositifs de serrage (8, 9, 10 ; 8', 9', 10') est égal au nombre de longerons (5, 6, 7) de la palette (1).

4. Machine pour former et reclouer des palettes en bois selon la revendication 3, **caractérisée en ce que** le nombre de lèvres (22, 22') de chaque groupe de dispositifs de serrage (8, 9, 10 ; 8', 9', 10') est égal à trois.

5. Machine pour former et reclouer des palettes en bois (1) selon les revendications précédentes, **caractérisée en ce que** les premiers moyens de poussée comprennent au moins deux arbres (23, 24) parallèles entre eux, fixés aux deux extrémités du bord inférieur des lèvres (22) du premier groupe de dispositifs de serrage (8, 9, 10) et **en ce que** les seconds moyens de poussée comprennent au moins deux arbres (23', 24') parallèles entre eux, fixés aux deux extrémités du bord inférieur des lèvres (22') du second groupe de dispositifs de serrage (8', 9', 10').

6. Machine pour former et reclouer des palettes en bois selon la revendication 5, **caractérisée en ce que** les arbres (23', 24') des seconds moyens de poussée sont situés entre les arbres (23, 23') des premiers moyens de poussée.

7. Machine pour former et reclouer des palettes en bois selon les revendications précédentes, **caractérisée en ce que** chacun des éléments (11) du premier groupe d'éléments de reclouage (11) est composé d'un vérin (25) réglé pour être actionné par un cylindre hydraulique, et **en ce que** chacun des éléments (12) du premier groupe d'éléments de reclouage (12) est composé d'un vérin (26) réglé pour être actionné par un cylindre pneumatique.

8. Machine pour former et reclouer des palettes en bois selon les revendications précédentes, **caractérisée en ce que** le support (17) pour les premiers et seconds moyens de poussée, agencés sur le châssis inférieur (13), se composent de poutres parallèles intermédiaires (27, 27') respectives sur les extrémités desquelles des paliers linéaires (28, 29 ; 28', 29') sont agencés, sur lesquels les arbres (23, 24 ; 23', 24') des premiers et seconds moyens de poussée reposent.

9. Machine pour former et reclouer des palettes en bois selon les revendications précédentes, **caractérisée en ce que** les dispositifs d'entraînement des moyens de commande comprennent deux cylindres hydrauliques (30, 30') situés à proximité de chacun des longerons latéraux (5, 6) de la palette et sont raccordés aux premiers et seconds moyens de poussée, respectivement, des tirants (31, 31') respectifs.

10. Machine pour former et reclouer des palettes en bois selon les revendications précédentes, **caractérisée en ce que** les pattes (18) du châssis intermédiaire (14) sont verticalement ajustables.

11. Machine pour former et reclouer les palettes en bois selon les revendications précédentes, **caractérisée en ce qu'**elle est dotée d'un mécanisme (32) pour garantir la limite dans le sens de la longueur de la palette (1), comprenant une base de support (33) située au-dessus de la palette (1), deux cylindres d'entraînement (34, 34') raccordés avec une possibilité de rotation à ladite base de support (33) au moyen du support (35, 35') respectif, une butée (36) raccordée à l'un des cylindres d'entraînement (34) au moyen de premier bras de transmission (37), et un élément de compression (38) raccordé à l'autre cylindre d'entraînement (34') au moyen des seconds bras de transmission (37'), lesquels premier et second bras de transmission (37, 37') sont articulés au niveau de l'une de leurs extrémités, par rapport à leurs cylindres d'entraînement (34, 34') correspondant et raccordés avec la possibilité de rotation, au niveau de leur point intermédiaire (39, 39') aux bords de la base de support (33) perpendiculaire aux longerons (5, 6, 7) de la palette (1) et dont l'élément de compression (38) est doté d'un cylindre (43) et d'une plaque (44) réglée afin d'être actionnée par ledit cylindre de poussée (43).

12. Machine pour former et reclouer des palettes en bois (1) selon la revendication 10, **caractérisée en ce que** le mécanisme (32) pour garantir la limite dans le sens de la longueur de la palette (1) est situé au-dessus du châssis supérieur (15) et au-dessus des éléments de reclouage (11, 12) et fixé à ceux-ci au moyen des colonnes de support (21) agencées sur ledit châssis supérieur (15).
